# EUROPÄISCHE PATENTSCHRIFT

(11) **EP 0 637 167 B1**
(45) Veröffentlichungstag und Bekanntmachung des Hinweises auf die Patenterteilung: **28.04.1999**
(21) Anmeldenummer: 93111975.4
(22) Anmeldetag: 28.07.1993
(51) Int. Cl.: H04N 5/225, G01B 11/02, H04N 5/232

(54) **Messkamera**
Measurement Camera
Caméra de mesure

(43) Veröffentlichungstag der Anmeldung: 01.02.1995
(73) Patentinhaber: Jos. Schneider Optische Werke Kreuznach GmbH & Co. KG, 55543 Bad Kreuznach (DE)
(72) Erfinder: Lenhardt, Karl, Dr.Dipl.-Phys., D-55543 Bad Kreuznach (DE); Körpert, Heinz, Ing.(grad), D-50000 Bad Kreuznach (DE); Thomas, Otto, D-55543 Bad Kreuznach (DE)
(74) Vertreter: Beckensträter, Friedrich Wilhelm, Dr.

(56) Entgegenhaltungen:
- EP-A- 0 079 428
- EP-A- 0 481 418
- WO-A-93/03575
- DE-A- 3 243 920
- DE-A- 3 811 837
- DE-A- 4 107 722
- DE-U- 8 629 399
- FR-A- 2 453 421
- US-A- 3 928 858
- US-A- 4 570 185
- US-A- 4 814 889
- US-A- 4 982 216
- PATENT ABSTRACTS OF JAPAN vol. 5, no. 023 (E-045)12. Februar 1981 & JP-A-55 149 575 (HITACHI LTD) 20. November 1981
- IEEE TRANSACTIONS ON CONSUMER ELECTRONICS Bd. 34, Nr. 3 , August 1988 , NEW YORK, USA Seiten 497 - 504 ADACHI, ET AL. 'A NEW CAMERA- TYPE COLOR IMAGE SCANNER WITH A HIGH SPEED SCANNING MECHANISM'
- PATENT ABSTRACTS OF JAPAN vol. 11, no. 400 (E-569)26. Dezember 1987 & JP-A-62 161 283 (MATSUSHITA) 17. Juli 1987
- VDI ZEITSCHRIFT Bd. 132, Nr. 10 , Oktober 1990 , DÜSSELDORF,DEUTSCHLAND Seiten 193 - 198 XP000165985 TH. PFEIFER, J.ELZER 'OPTOELEKTRONISCHE BOHRERVERSCHLEISSÜBERWACHUNG'

## Beschreibung

Die Erfindung betrifft eine Meßkamera bestehend aus Objektiv, Kamerakörper, Halbleiterbildwandler mit Kamera-Elektronik und Mitteln zur Fokussierung.

Für die berührungslose Längenmessung im zwei- und dreidimensionalen Raum werden zunehmend Videokameras als Meßwertaufnehmer für Meßsysteme eingesetzt. Hierbei wird als Meßprinzip die Zentralprojektion der Objektpunkte in eine Bildebene angewandt. Das Bild wird nach Digitalisieren im Bildverarbeitungrechner interpretiert, und Strecken zwischen Konturmerkmalen werden im Bild vermessen. Bekannte Voraussetzungen hierfür sind eine hinreichend genau definierte Kammerkonstante und Lage des photogrammetrischen Hauptpunktes. Diese Größen definieren die sogenannte innere Orientierung der Meßkamera. Im Bereich der digitalen Nahbereichsphotogrammetrie wird aus einem Bildverband konvergierender Aufnahmen auf die räumliche Zuordnung der Objektpunkte geschlossen.

Die Meßgenauigkeit der Videomeßtechnik ist direkt abhängig von der Genauigkeit und Stabilität der Parameter der inneren Orientierung. Durch Kalibrierung können diese Parameter erfaßt werden. Vielfach werden für die Meßtechnik Standard-Videokameras, vorzugsweise mit Festkörper-Flächen- oder Zeilensensoren, eingesetzt. Derartige Standard-Videokameras, bei denen auch zur automatischen Scharfeinstellung, anstelle der Bewegung des Aufnahmeobjektivs, ein zweidimensionaler Festkörperbildsensor auf einer Antriebsvorrichtung angeordnet ist, die diesen längs der optischen Achse der Kamera verschiebt, sind bereits bekannt. Solche Videokameras sind u.a. in der DE OS 32 43 920, in der JP-A 55 149 575 und der US 4,570,185 beschrieben. Alle diese vorrangig für Videoaufnahmen vorgesehenen Kameras haben jedoch den Nachteil, daß damit der Stabilität der inneren Orientierung nicht genügend Rechnung getragen wird. Insbesondere vermindern folgende Gegebenheiten die Genauigkeit dieser Meßanordnungen:
- Das Objektiv ist über einen C-mount-Anschluß (Gewinde) mit der Kamera verbunden, was keine reproduzierbare Zuordnung des Projektionszentrums zur Bildebene gewährleistet.
- Die Fokussierung wird mittels Schneckentriebs am Objektivtubus vorgenommen. Der Schneckenzug ist spielbehaftet mit der Folge mangelhafter Zuordnung des Projektionszentrums.
- Die Bildwandler sind ungenau zur optischen Achse ausgerichtet.
- Bei Verstellung der Bildweite zur Fokussierung ist die aktuelle Kammerkonstante nicht bekannt, es sei denn, es wird eine erneute Kalibrierung vorgenommen.
- Zeitliche Schwankungen von Umgebungseinflüssen (Temperatur, Feuchtigkeit, Erschütterungen) verändern die Lage des Projektionszentrums.
- Die Restfehler wie z. B. die Verzeichnung der Objektive sind nicht bekannt oder werden nicht berücksichtigt.

Obwohl im Bereich der digitalen Bildverarbeitung üblicherweise mit Subpixelalgorithmen gearbeitet wird und rein numerisch hohe Genauigkeiten postuliert werden, weichen bedingt durch obige Einflußfaktoren die nachweisbaren Genauigkeiten um Größenordnungen hiervon ab.

Aufgabe der Erfindung ist es, unter Vermeidung der genauigkeitsmindernden Einflüsse bekannter Meßkameras eine Meßkamera zu schaffen, bei der die Meßgenauigkeit beträchtlich erhöht ist.

Erfindungsgemäß wird dies erreicht durch die kennzeichnenden Merkmale von Patentanspruch 1. Vorteilhafte Weiterbildungen ergeben sich aus den Unteransprüchen.

Die Erhöhung der Meßgenauigkeit der Meßkamera wird dabei erzielt durch die Verlegung und Integrierung der Fokussiermittel in das Innere des Kamerakörpers, und zwar durch die dortige, entlang der optischen Achse der Meßkamera verschiebbare Anordnung des Halbleiterbildwandlers, wobei die Verschiebung mittels hochgenauer Führung(en) erfolgt. Dazu erfahren die optischen Wirkungsgruppen des Objektivs hinsichtlich ihrer lateralen wie auch axialen Lagen, bezogen auf die Schnittstelle Objektiv-Kamera, deutlich präzisere Werte als sie bei bekannten Meßkameras, bei denen die Mittel zur axialen Verschiebung einzelner optischer Wirkungsgruppen oder des gesamten optischen Systems objektivseitig vorgesehen sind, erzielbar sind. Da die Führungsbahn des Halbleiterbildwandlers mit engsten Parallelitäts-Toleranzen zur Bezugsachse von Meßkopf und Schnittstelle Objektiv-Kamera orientiert ist, resultieren über den Fokussierweg entsprechend kleine Bildauswanderungen, die überdies durch die Auswahl der Führungsmittel in hohem Maße reproduzierbar, d. h. meßbar und korrigierbar sind. Die hohe Steifigkeit der Führungskonstruktion garantiert auch die zeitliche Konstanz der geometrischen Bezüge. Da erfindungsgemäß die Schnittstelle Objektiv-Kamera anwendungsorientiert neu definiert ist, ist insbesondere die Reproduziergenauigkeit gegenüber herkömmlichen Schnittstellen erheblich gesteigert. Durch die Ausbildung der Schnittstelle Objektiv-Kamera wird eine in engen Toleranzen eindeutige laterale, axiale und azimutale Zuordnung des Objektivs zum Kamerakörper ermöglicht. Auch bei Fokussierung bleibt die stabile Lage des Projektionszentrums in Bezug auf das gehäusefeste Koordinatensystem der Kamera erhalten. Verbleibende Restfehler, z. B. die Verzeichnung des Objektivs, können bei dem gegebenen Aufbau der Meßkamera durch einen Rechner korrigiert werden. Die hohe Meßpräzision der Meßkamera kann durch Verwendung von Präzisions-Meßobjektiven gestützt und gesteigert werden.

Aus der Integration der Komponenten Halbleiterbildwandler, (dessen) Führung, Antrieb und Istwertgeber ergeben sich für die berührungslose Meßtechnik eine hohe Wiederholgenauigkeit, ein geringer Kalibrieraufwand und eine automatisierbare Fokusverstellung bei gleichzeitiger Wahrung der hohen Meßgenauigkeit. Es können auch verschiedene Autofokusverfahren integriert sein. Dadurch gewinnt die Erfindung auch Bedeutung für den Kamera- und Objektivbau schlechthin.

Weitere Merkmale, Einzelheiten und Vorteile der Erfindung ergeben sich aus der nachfolgenden Beschreibung eines Ausführungsbeispiels anhand der anhängenden Zeichnungen. Darin zeigen
- Fig. 1: in schematischer dreidimensionaler Darstellung das Konzept des Meßsystemes einer erfindungsgemäßen Meßkamera,
- Fig. 2: in vertikalem Längsschnitt Kameragehäuse und Meßkopf einer erfindungsgemäßen Meßkamera in Seitenansicht,
- Fig. 3: eine Frontansicht auf den Meßkopf einer erfindungsgemäßen Meßkamera,
- Fig. 4: in vertikalem Längsschnitt das Objektiv einer erfindungsgemäßen Meßkamera in Seitenansicht und
- Fig. 5: in horizontalem Längsschnitt das Kameragehäuse einer erfindungsgemäßen Meßkamera in Draufsicht.

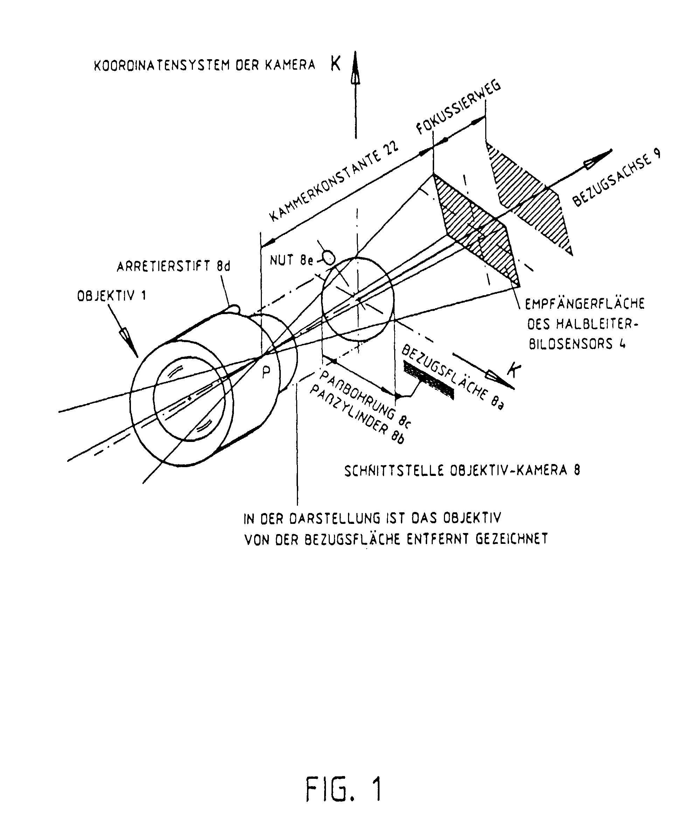

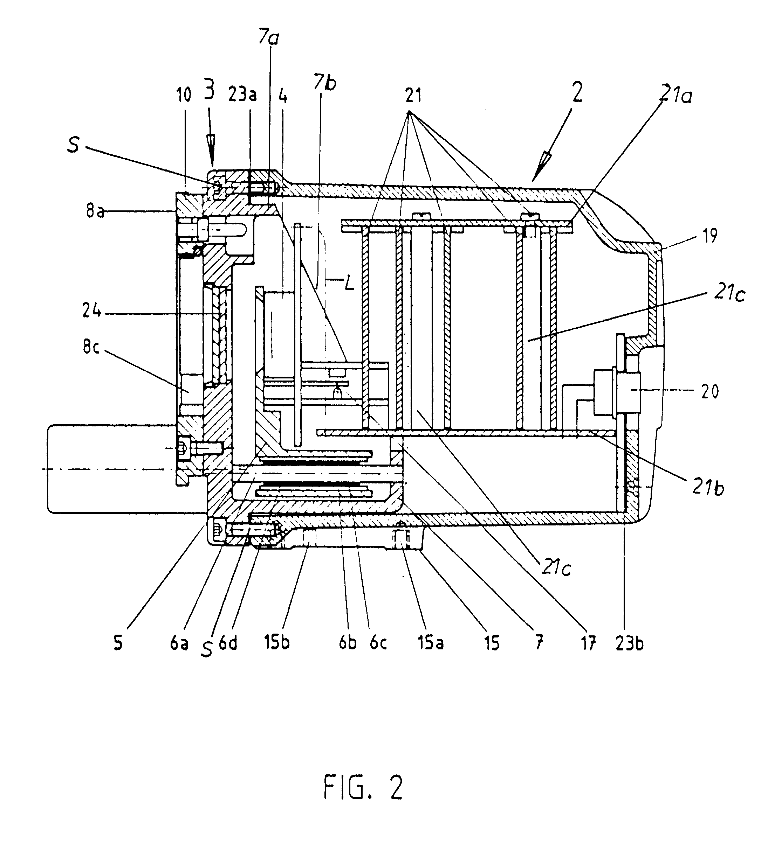

Die Fig. 1, 2, 3 und 4 veranschaulichen das Meßsystem einer erfindungsgemäßen Meßkamera. In der schematischen Darstellung der Fig. 1 ist mit 1 das Objektiv (Meßobjektiv) bezeichnet, wobei das Objektiv l hier von der Bezugsfläche 8a am Meßkopf 3 am Kameragehäuse 2 (siehe auch Fig. 2) entfernt dargestellt ist. Innerhalb des Kameragehäuses 2 ist in Fig. 2 mit 4 der Halbleiter-Bildsensor (Halbleiterbildwandler) bezeichnet, der von einem Sensorträger 5 getragen und auf ihm fixiert ist. Der Sensorträger 5 wird auf einer aus Führungssäulen 6a, Führungsbuchsen 6b, Kugelkäfigen 6c und Führungskugeln 6d bestehenden Wälzführung geführt, die ihrerseits auf einem von der rückwärtigen Fläche des Meßkopfes 3 in das Innere des Kameragehäuses 2 abragenden Träger 7 untergebracht ist. Mittels dieser Führung ist der Sensorträgen 5 mit dem Halbleiter-Bildsensor 4 innerhalb des Meßkopfes 3 in Richtung zurn Objektiv 1 hin und vom Objektiv 1 zurück axial verschiebbar bzw. verstellbar (gemäß Zeichnung Fig. 2 von rechts nach links und wieder nach rechts zurück). Auf diese Weise vollzieht der Halbleiter-Bildensor 4 im Meßkopf 3 entlang der Bezugsachse 9 des Meßkopfes 3 eine axiale Fokussierbewegung, das heißt daß gegenüber den eingangs erwähnten Meßkameras des Standes der Technik die Mittel zur Fokussierung der Meßkamera auf unterschiedliche Objektdistanzen vom Objektiv in den Meßkopf 3 des aus Meßkopf 3 und Kameragehäuse 2 gebildeten Kamerakörpers verlegt sind.

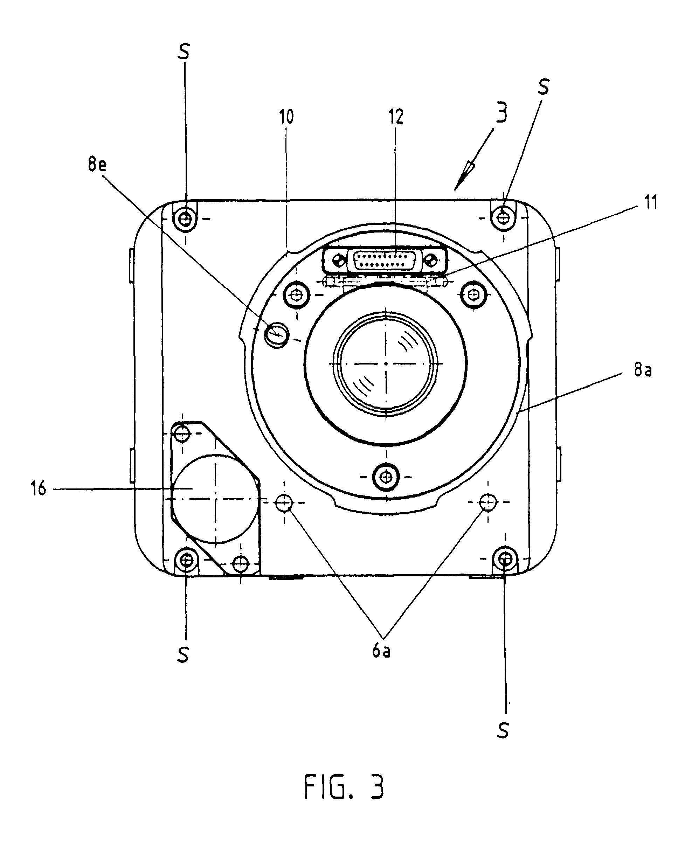

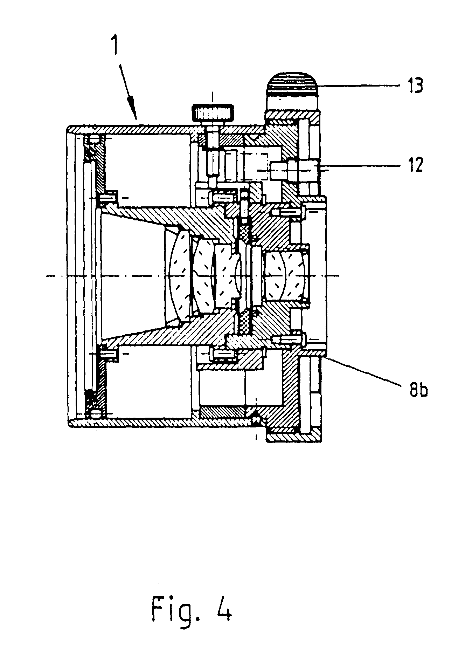

In der Darstellung der Fig. 1 ist mit P das Projektionszentrum des Objektivs 1 bezeichnet, 9 ist die Bezugsachse des Meßkopfs 3, die beiden schraffierten Felder kennzeichnen die Empfängerfläche des Halbleiter-Bildsensors 4 einmal in ihrer äußersten vorderen und einmal in ihrer äußersten hinteren Stellung, wobei die Distanz zwischen diesen Stellungen den Fokussierweg des Halbleiter-Bildsensors 4 bildet. Die festzulegende Stellung des Halbleiter-Bildsensors 4 auf dem Fokussierweg wird abhängig von der Brennweite des Objektivs 1 und den gewünschten Abbildungsmaßstäben β (β = 0,025 bis 0,1) gewählt. Mit dem Pfeil 22 ist die Kammerkonstante gekennzeichnet und mit den Pfeilen K das (gehäusefeste) Koordinatensystem der Meßkamera (Fig. 1). Die Schnittstelle 8 zwischen Objektiv 1 und Kamerakörper 3, 2 ist neu definiert und festgelegt durch Elemente zur exakten axialen Festlegung, nämlich die Bezugsfläche 8a am Meßkopf 3 (Fig. 1, 2, 3), zur lateralen Festlegung, nämlich den Paßzylinder 8b am Objektiv 1 (Fig. 1, 4) und die gegenüberliegende Paßbohrung 8c im Meßkopf 3 (Fig. 1, 2), sowie zur azimutalen Zuordnung, nämlich den Arretierstift 8d am Objektiv 1 (Fig. 1 der in eine Nut 8e am Meßkopf 3 (Fig. 1, 3) eingreift.

Vom Meßkopf 3 ragt in dessen unterem Bereich (gemäß Zeichnung Fig. 2) von dessen rückwärtiger Fläche und mit diesem einstückig als ein Gußteil ausgebildet rechtwinklig der Träger 7 für die Wälzführung in das Innere des Kameragehäuses 2 ab, vorzugsweise so weit, daß die von ihm getragene Wälzführung für den Sensorträger 5 es diesem ermöglicht, den Halbleiter-Bildsensor 4 auch in seine äußerste hintere Stellung auf seinem Fokussierweg zu transportieren. Von dort ragt der Träger 7 um eine gewisses Stück, etwa bis zur oberen Begrenzung der Wälzführung des Sensorträgers 5, rechtwinklig nach oben (gemäß Zeichnung Fig. 2) ab, und bildet vorzugsweise im Längs- und Querschnitt des Kamerakörpers 3, 2 in dessen unterem Bereich (gemäß Zeichnung Fig. 2) eine Wanne oder einen Kasten. Hierzu ist der Träger 7 vorzugsweise als geschlossene Rahmenkonstruktion ausgebildet mit einer geringeren rechtwinkligen Abragung 7a in das Innere des Kameragehäuses 2 im oberen Bereich des Meßkopfs 3 (gemäß Zeichnung Fig. 2) und mit die Abragung 7a im oberen Bereich sowie die Abragung 7 im unteren Bereich verbindenden, beidseitigen äußeren Seitenwände 7b, deren rückwärtige Kante von der oberen Abragung 7a schräg abwärts in Richtung des nach oben abgewinkelten Endstücks des Trägers 7 in dem unteren Bereich verläuft. Auch bei dieser Rahmenkonstruktion sind der Meßkopf 3 und der Träger 7 mit der oberen Abragung 7a und den Seitenwänden 7b vorzugsweise einstückig als ein Gußteil ausgeführt.

Gemäß Fig. 2 und Fig. 3 sind zwei Führungssäulen 6a der Wälzführung, deren Länge sich nach dem Fokussierweg des Halbleiter-Bildsensors 4 bestimmt, einerseits (vorn) im Meßkopf 3 und andererseits (hinten) im nach oben abgewinkelten Endstück des Trägers 7 (in dem unteren Bereich) gelagert. Die zwei in Abstand zueinander achsparallel und parallel zur Bezugsachse 9 angeordneten Führungssäulen 6a, die diese mit Abstand umgebenden Führungsbuchsen 6b, die jeweils zwischen Führungssäule 6a und Führungsbuchse 6b gebildeten Kugelkäfige 6c und die darin gelagerten Führung.skugeln 6d gemäß Fig. 2 und 3 sind als sogenannte "Hochgenau-Kugelführung" ausgeführt. Die durch die Führungssäulen 6a und die Führungsbuchsen 6b bestimmten Führungsbahnen des Sensorträgers 5 sind dabei mit engsten Parallelitätstoleranzen zur Bezugsachse 9 (Fig. 1) des Meßkopfs 3 und zugleich zur Schnittstelle Objektiv-Kamera 8 orientiert, so daß über den Fokussierweg entsprechend kleine Bildauswanderungen resultieren, die überdies durch die Auswahl der Führungsmittel (die vorerwähnte Wälzführung) in hohem Maße reproduzierbar sind. Dadurch, daß der Träger 7 für die Führungsmittel vorzugsweise in Form einer geschlossenen Rahmenkonstruktion von hoher Steifigkeit ausgeführt ist, ist die zeitliche Konstanz der geometrischen Bezüge garantiert. Zur Kompensation des funktions- und fertigungsbedingten Spiels zwischen den Bezugselementen an Objektiv 1 und Meßkopf 3, nämlich Paßzylinder 8b am Objektiv 1 (Fig. 4) und Paßbohrung 8c im Meßkopf 3, können vorteilhaft geeignete Mittel zur elastischen Anstellung vorgesehen sein, wie z. B. eine tangential angeordnete Biegefeder 11 (Fig. 3), die in radialer Richtung einen Druck gegen den Paßzylinder 8b des Objektivs 1 ausübt. In die Schnittstelle Objektiv-Kamera 8 ist im Ausführungsbeispiel auch die in Fig. 3 und 4 mit der Bezugsziffer 12 gekennzeichnete elektrische Steckverbindung (zur Regelung der Objektivblende) zwischen Objektiv 1 und Meßkopf 3 (und zum Kameragehäuse 2) integriert, und zwar dergestalt, daß beim Anschluß des Objektivs 1 an den Meßkopf 3 die elektrische Verbindung automatisch und zwangsläufig geführt und gesteckt wird. Sie ist damit geschützt innerhalb der Meßkamera sowie anwenderfreundlich (d. h. sie herzustellen, wird nicht vergessen) untergebracht. Die Verbindung zwischen Objektiv 1 und Meßkopf 3 an der Schnittstelle 8 ist vorzugsweise als Bajonettverbindung ausgeführt bestehend aus einem Bajonettflansch 10 an der Frontseite des Meßkpfs 3 (Fig. 3) und einem Überwurfring 13 an der Anschlußseite des Objektivs 1 (Fig. 4).

Die Empfängerfläche des Halbleiter-Bildsensors 4 ist in engen Grenzen parallel zur Bezugsfläche 8a der Schnittstelle Objektiv-Kamera 8 festgelegt. Ebenso ist die Achse des Halbleiter-Bildsensors 4 (Sensorachse), die durch das Lot auf den Sensorflächenmittelpunkt definiert ist, zur Bezugsachse 9 des Meßkopfs 3 ausgerichtet und lateral orientiert (vgl. Fig. 1), wobei angestrebt wird, daß durch geeignete Justage die Sensorachse und die Bezugsachse des Meßkopfs zusammenfallen und diese Achsen weiterhin mit der optischen Achse des Objektivs 1 zusammenfallen.

Die genaue azimutale Zuordnung einer Zeile des Halbleiter-Bildsensors 4 zu einer Anschlußfläche des Meßkopfs 3 (zum Objektiv 1) stellt den mechanischen Bezug von Anschlußelementen des Kameragehäuses 2, gemäß Fig. 2 in Gestalt von Gewindebohrung(en) 15a und Arretierungsbohrung(en) 15a an der Unterseite des Kameragehäuses 2, zu einer in der Zeichnung nicht dargestellten Halterung oder einem Träger her, die bzw. der die Meßkamera zum Objekt hin orientiert und ausrichtet.

Der Meßkopf 3 und das Kameragehäuse 2 sind, wie aus Fig. 2 und Fig. 3 ersichtlich ist, mittels Befestigungsschrauben S lösbar miteinander verbunden.

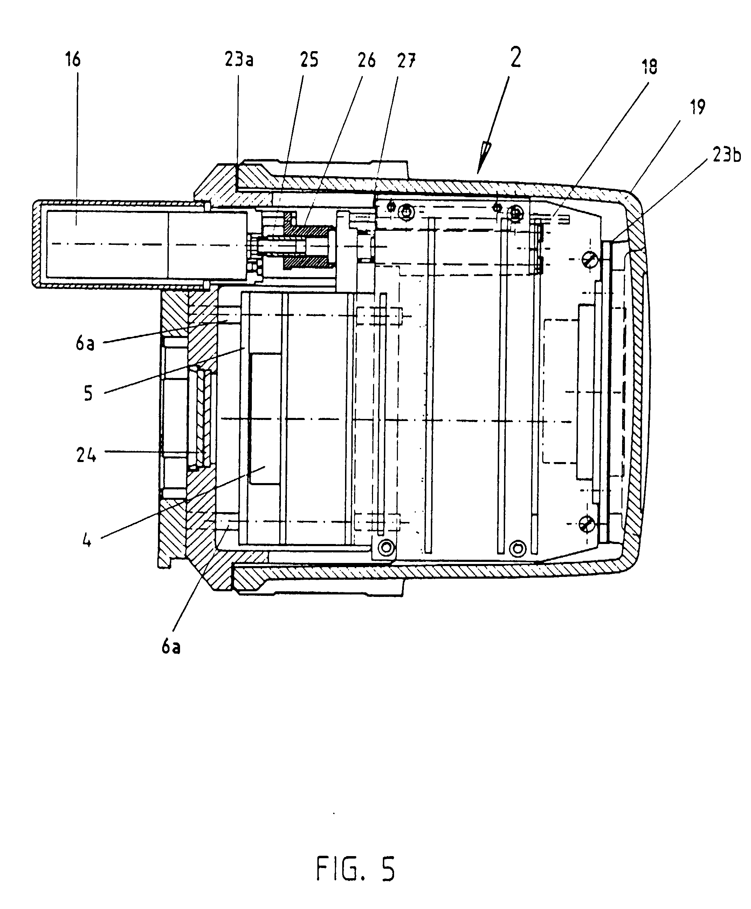

Es können ferner Mittel zur Erfassung und Verarbeitung sowohl (a) einer absoluten axialen Position des Halbleiter-Bildsensors 4 als auch (b) einer aktuellen (tatsächlich eingenommenen) axialen Position des Halbleiter-Bildsensors 4 vorgesehen sein. Im dargestellten Ausführungsbeispiel ist dies im ersteren Falle (a) eine optoelektronische Lichtschranke 17 in Fig. 2, im zweiten Falle (b) ein Linearpotentiometer (Linearweggeber) 18 in Fig. 5. Aus den mittels dieser erhaltenen Daten kann eindeutig die jeweilige Kammerkonstante 22 abgeleitet werden. Dabei ist die Lichtschranke 17 (gemäß Zeichnung Fig. 2) hinter dem Halbleiter-Bildsensor 4 mit Abstand zu diesem auf dem Sensorträger 5 angeordnet, wobei Sender und Empfänger der Lichtschranke 17 mit dem Meßkopf 3 und eine die Kodierung tragende Fahne mit dem Sensorträger 5 verbunden sind. Das Linearpotentiometer 18 ist (gemäß Zeichnung Fig. 5) ebenfalls hinter dem Halbleiter-Bildsensor 4 mit Abstand zu diesem angeordnet mit dem Träger 7 des Meßkopfs 3 verbunden, während der Schleifer (die Schleifkontakte) des Potentiometers 18 mit dem Sensorträger 5 verbunden sind.

Die Elemente zur Einstellung einer aktuellen axialen Position des Halbleiter-Bildsensors 4 können ein in Fig. 3 und in Fig. 5 schematisch dargestellter motorischer Antrieb 16 sein, der, wie in Fig. 5 gezeigt ist, über einen aus Gewindespindel 25 und Gewindemutter 26 bestehenden Schraubtrieb den Sensorträger 5 axial verschiebt. Zum Ausgleich des axialen Spiels zwischen den Getriebegliedern (Antrieb 16, Schraubtrieb 25, 26, Sensorträger 5) kann fluchtend zur Achse des Antriebs 16 eine Druckfeder 27 angebracht sein, die von rückwärts einen Druck gegen den Sensorträger 5 ausübt. Es kann aber auch ein in den Ausführungsbeispielen gemäß Zeichnung nicht dargestellter manueller Antrieb (z. B. eine Feineinstellschraube) für den Sensorträger 5 vorgesehen sein.

Der motorische Antrieb 16 kann vorzugsweise ein Gleichstrommotor, ein piezoelektrischer Antrieb oder ein Schrittmotor sein.

Das Kameragehäuse 2 kann gemäß Fig. 2 und Fig. 5 eine Wandung 19 aus Metallguß aufweisen, die zusammen mit dem Träger 7 und mittels Dichtungen 23a und 23b die gehäuseseitigen Bauteile des Meßkopfs 3 und die zur Kamera-Elektronik 21 gehörenden Bauteile gegen die äußere Umgebung um- und abkapselt, wobei die objektivseitige Öffnung des Meßkopfs 3 mittels eines Schutzglases 24 abgedeckt ist.

Mit der Bezugsziffer 20 ist in Fig. 2 die Schnittstelle Kamera-Bildverarbeitung gekennzeichnet, wobei das angeschlossene elektronische Gerät zur Verarbeitung und Auswertung der Bildsignale zeichnerisch nicht mehr dargestellt ist.

Durch die Verlegung und Integrierung der Fokussiermittel in den Kamerakörper wird erreicht, daß auch bei Fokussierung die Lage des Projektionszentrums P bezüglich des gehäusefesten Koordinatensystems K erhalten bleibt und daß auch bei Wechsel des Objektivs 1 das jeweilige Projektionszentrum P seine Lage mit hinreichender Reproduzierbarkeit beibehält. Die Fokussierung erfolgt durch axiale Verschiebung des Halbleiter-Bildsensors 4 unter Wahrung eines minimalen bekannten und konstanten Ablauffehlers, so daß der Ablauffehler korrigierbar ist. Die Bildebenenposition und damit auch die fokusabhängigen Parameter der inneren Orientierung sind durch separate Lagemessung stets mit hoher Genauigkeit bekannt und in den Meßalgorithmus einbezogen.

Der Sensorträger 5 kann zur wahlweisen Aufnahme von Halbleiter-Bildsensoren 4 verschiedener Formate ausgelegt sein. Ist die Kamera über eine Schnittstelle 20 an einen Rechner zur Bildverarbeitung angeschlossen, kann von diesem bei geeigneter Auswahl des übergebenen Bildes ein Regelkreis zur Positionierung des Halbleiter-Bildsensors 4 auf die beste Schärfeebene aufgebaut und damit eine automatische Fokussierung durchgeführt werden.

Zur elektronischen Kompensation des Temperaturganges der Kammerkonstante 22 kann ferner ein in den Figuren nicht dargestellter Temperatursensor vorgesehen sein.

Der Halbleiter-Bildsensor 4 ist vorzugsweise ein CCD-Bildsensor (z. B. vom Typ Interline Transfer mit 756(H) X 581(V) aktiven Pixeln). Das Auslesen des Bildsensors 4 und die Aufbereitung der Bildsignale für die Verarbeitung und Auswertung erfolgt in für CCD-Videokameras bekannter und bewährter Weise. Die Kameraelektronik kann zur einfachen Anpaßbarkeit des jeweils eingesetzten Bildsensors 4 und/oder der Schnittstelle Kamera-Bildverarbeitung 20 modular aufgebaut sein. Sie besteht im Ausführungsbeispiel der Fig. 2 aus fünf mit aktiven und passiven elektronischen Bauteilen bestückten Leiterplatten 21, die auf einer Mutterplatine 21a aufgesteckt und durch eine Abdeckung 21b arretiert sind und wobei gegebenenfalls zwischen Mutterplatine 21a und Abdeckung 21b noch in Fig. 2 angedeutete Distanzhalter (Distanzsäulen) 21c vorgesehen sein können. Die strichpunktierte Linie L in Fig. 2 deutet die elektrische Verbindung des Halbleiter-Bildsensors 4 mit der Mutterplatine 21a an.

Das verwendete Objektiv 1 ist vorzugsweise von hochpräzisem, einfachem Aufbau. Wie schon erwähnt, können bei der Meßkamera vorteilhaft verschiedene Objektive 1 mit einheitlicher Schnittstelle eingesetzt werden, die der jeweiligen Meßaufgabe angepaßt und je nach aktueller Meßaufgabe untereinander auswechselbar sind. Zweckmäßig enthalten die Objektive 1 eine elektronische Kodierung zum Abruf von typischen und/oder individuellen optischen Daten durch einen Rechner. Sie können ferner einen Blendenantrieb und/oder einen Positionsgeber zur Übergabe der Blendeneinstellung im Objektiv 1 über die Schnittstelle Kamera-Bildverarbeitung 20 an den Rechner aufweisen, so daß durch den Rechner durch Auswertung des übergebenen Bildes (mittels Software) ein Regelkreis zur Anpassung der Blende im Objektiv 1 an die Objekthelligkeit aufgebaut werden kann. Bei wahlweiser Verwendung von Objektiven 1 mit variabler Brennweite und bei deren Ausstattung mit einem Brennweitenantrieb und/oder Positionsgeber kann auch die Information über die Brennweite über die Schnittstelle Kamera-Bildverarbeitung 20 an den Rechner übergeben werden zur Einstellung der Brennweite (mittels Software) durch den Rechner. Bei einem Varioobjektiv mit Positionsgeber kann die bei Brennweitenvariation erforderliche Korrektur der Schnittweite durch rechnergesteuerte Verschiebung des Halbleiter-Bildsensors 4 erzielt werden.

Von besonderer Bedeutung für die Meßgenauigkeit der erfindungsgemäßen Meßkamera ist die Führung des Sensorträgers 5. Dieser ist auf zwei Präzisions-Wälzführungen geführt, die, wie schon zu Fig. 2 gesagt, jeweils aus Führungssäule 6a, Führungsbuchse 6b, Kugelkäfig 6c und Führungskugeln 6d bestehen, wobei jeweils die Passung von Führungssäule 6a und Führungsbuchse 6b zusammen mit den Führungskugeln 6d hochgenau gearbeitet und so gewählt ist, daß sich eine Vorspannung ergibt, um eine spielfreie und reibungsarme Führung zu gewährleiten. Durch die mittels dieser Wälzführung erzielte Vermeidung, jedenfalls Verminderung der Haftreibung sind kleinste Fokussierwege des Sensorträgers 5 einstellbar. Die Lage der beiden Führungssäulen 6a ist auch aus Fig. 3 und Fig. 5 ersichtlich, wobei in Fig. 5 über ihnen der Sensorträger 5 mit dem Halbleiter-Bildsensor 4 eingezeichnet ist. Der Meßkopf 3 mit dem Träger 7 ist vorzugsweise als Gußrahmenkonstruktion in Aluminium eloxiert ausgeführt, während die Führungsmittel 6a, 6b, 6c, 6d vorzugsweise in einem hochfesten (hochlegierten) Stahl ausgeführt sind; hierdurch wird ein Höchstmaß an Steifigkeit des konstruktiven Aufbaus der Mittel zur Führung des Sensorträgers 5 erreicht. Auch die Wandung 19 des Kameragehäuses 2 ist vorzugsweise in Aluminium eloxiert ausgeführt. Durch die vorbeschriebene Wahl der Materialien (Aluminium eloxiert bzw. hochfeste Stähle) wird zugleich eine korrosionssichere Ausführung des Kamerakörpers 3, 2 erreicht, welche die Erhaltung der Präzision der Meßkamera für deren Lebensdauer gewährleistet.

Die Meßkamera ist vorzugsweise eine CCD-Kamera (CCD = Charge-Coupled Device), weil mit deren Technologie die derzeit höchste Meßgenauigkeit erreicht werden kann.

## Patentansprüche

1. Meßkamera bestehend aus Objektiv, Kamerakörper, Halbleiterwandler mit Kamera-Elektronik und Mitteln zur Fokussierung,
**dadurch gekennzeichnet,**
daß der Kamerakörper aus dem Kameragehäuse (2) und einem Meßkopf (3) gebildet ist und daß zur Fokussierung ein Halbleiterbildwandler (Halbleiter-Bildsensor 4) innerhalb des Kamerakörpers derart angeordnet ist, daß er (4), in einem Sensorträger (5) gehalten und auf einer auf einem von der rückwärtigen Fläche des Meßkopfes (3) in das Innere des Kameragehäuses (2) abragenden Träger (7) befestigten Wälzführung mittels hochgenauer Führung(en) (6a bis 6d), lateral spielfrei, verschiebbar und motorisch positionierbar geführt, entlang der optischen Achse axial verschiebbar ist, so daß die Fokussierung unter Wahrung eines minimalen bekannten und konstanten Ablauffehlers durchführbar ist, und die Lage des Projektionszentrums (P) auch bei einem Wechsel des Objektivs (1) in Bezug auf das gehäusefeste Koordinatensystem (K) der Kamera erhalten bleibt.

2. Meßkamera nach Anspruch 1, dadurch gekennzeichnet, daß die Bildebenenposition und damit auch die fokusabhängigen Parameter der inneren Orientierung durch Mittel zur separaten Lagemessung stets mit hoher Genauigkeit erfaßbar und in den Meßalgorithmus einbeziehbar sind.

3. Meßkamera nach den Ansprüchen 1 und 2, dadurch gekennzeichnet, daß die Fokussierung des Halbleiterbildwandlers (Halbleiter-Bildsensors 4) über Feineinstellelemente manuell positionierbar ist.

4. Meßkamera nach einem der Ansprüche 1 bis 3, dadurch gekennzeichnet, daß Halbleiterbildwandler (Halbleiter-Bildsensoren 4) verschiedener Formate einsetzbar sind.

5. Meßkamera nach Anspruch 1, dadurch gekennzeichnet, daß der Sensorträger (5) zur wahlweisen Aufnahme von Halbleiterbildwandlern (Halbleiter-Bildsensoren 4) verschiedener Formate ausgelegt ist.

6. Meßkamera nach einem der Ansprüche 1 bis 5, dadurch gekennzeichnet, daß Mittel zur Erfassung der jeweiligen axialen Position des Halbleiterbildwandlers (Halbleiter-Bildsensors 4) vorgesehen sind.

7. Meßkamera nach Anspruch 6, dadurch gekennzeichnet, daß als Mittel zur Erfassung der jeweiligen axialen Position ein Linearpotentiometer (18) angeordnet ist.

8. Meßkamera nach einem der Ansprüche 1 bis 7, dadurch gekennzeichnet, daß zur axialen Null-Lage-Positionierung (Bezugsposition) des Halbleiterbildwandlers (Halbleiter-Bildsensors 4) optoelektronische Mittel (Lichtschranke 17) vorgesehen sind.

9. Meßkamera nach einem der Ansprüche 1 bis 8, dadurch gekennzeichnet, daß die Kamera über eine Schnittstelle (20) an einen Rechner anschließbar ist, von dem aus mittels Software über den motorischen Antrieb (16) der Halbleiterbildwandler (Halbleiter-Bildsensor 4) positionierbar ist.

10. Meßkamera nach einem der Ansprüche 1 bis 9, dadurch gekennzeichnet, daß die Fokusposition des Halbleiterbildwandlers (Halbleiter-Bildsensors 4) durch Auswertung von Strukturen des Bildinhalts bestimmbar ist.

11. Meßkamera nach einem der Ansprüche 1 bis 10, dadurch gekennzeichnet, daß die Kamera über eine Schnittstelle (20) an einen Rechner zur Bildverarbeitung anschließbar ist, von dem bei geeigneter Auswertung des übergebenen Bildes ein Regelkreis zur Positionierung des Halbleiterbildwandlers (Halbleiter-Bildsensors 4) auf die beste Schärfeebene aufbaubar und damit eine automatische Fokussierung durchführbar ist.

12. Meßkamera nach einem der Ansprüche 1 bis 11, gekennzeichnet durch einen Temperatursensor zur elektronischen Kompensation des Temperaturganges der Kammerkonstante (22).

13. Meßkamera nach einem der Ansprüche 1 bis 12, gekennzeichnet durch einen Meßkopf (3) von hoher mechanischer Steifigkeit.

14. Meßkamera nach Anspruch 13, dadurch gekennzeichnet, daß der Meßkopf (3) Bezugselemente (8a, 8c, 8e, 9) aufweist, mittels derer eine präzise Lage von Objektiv (1) und Halbleiterbildwandler (Halbleiter-Bildsensor 4) herstellbar ist.

15. Meßkamera nach einem der Ansprüche 1 bis 14, dadurch gekennzeichnet, daß die Empfängerfläche des Halbleiterbildwandlers (Halbleiter-Bildsensors 4) parallel zur Bezugsfläche (8a) der Schnittstelle Objektiv-Kamera (8) ausgerichtet ist.

16. Meßkamera nach einem der Ansprüche 1 bis 15, dadurch gekennzeichnet, daß die Wandung (19) des Kameragehäuses (2), der Meßkopf (3) und ein die objektivseitige Öffnung des Meßkopfes (3) abdekkendes Schutzglas (24) ein allseitig geschlossenes, die in ihm angeordneten Bauteile gegen äußere elektrische und klimatische Umgebungseinflüsse abkapselndes Schutzgehäuse bilden.

17. Meßkamera nach einem der Ansprüche 1 bis 16, dadurch gekennzeichnet, daß die Kamera-Elektronik (21) zur einfachen Anpaßbarkeit des jeweils eingesetzten Halbleiterbildwandlers (Halbleiter-Bildsensors 4) und/oder der Schnittstelle Kamera-Bildverarbeitung (20) modular aufgebaut ist.

18. Meßkamera nach Anspruch 1 oder einem der Ansprüche 4 bis 17, dadurch gekennzeichnet, daß der motorische Antrieb (16) ein Gleichstrommotor, ein piezoelektrischer Antrieb oder ein Schrittmotor ist.

19. Meßkamera nach einem der Ansprüche 1 bis 18, dadurch gekennzeichnet, daß an der Schnittstelle Objektivkamera (8) am Meßkopf (3) zur Kompensation des Lateralspiels zwischen den Bezugsflächen zwischen Objektiv (1) und Meßkopf (3) (ein) Andruckelement(e) (Biegefeder 11) angeordnet sind (ist).

20. Meßkamera nach einem der Ansprüche 1 bis 19, dadurch gekennzeichnet, daß das Objektiv (1) mittels einer Bajonettverbindung (Bajonettflansch 10, Überwurfring 13) am Meßkopf (3) fixierbar ist.

21. Meßkamera nach einem der Ansprüche 1 bis 20, dadurch gekennzeichnet, daß bei ihr verschiedene, der jeweiligen Meßaufgabe angepaßte Objektive (1) mit einheitlicher Schnittführung einsetzbar sind.

22. Meßkamera nach einem der Ansprüche 1 bis 21, dadurch gekennzeichnet, daß das Objektiv (1) von hochpräzisem einfachem Aufbau ist.

23. Meßkamera nach einem der Ansprüche 1 bis 22, dadurch gekennzeichnet, daß die elektrische Steckverbindung (12, 12) zwischen Objektiv (1) und Meßkopf (3) in die Bajonettverbindung (10, 13) integriert ist.

24. Meßkamera nach einem der Ansprüche 1 bis 23, dadurch gekennzeichnet, daß das Objektiv (1) eine elektronische Kodierung zum Abruf von typischen und/oder individuellen optischen Daten durch einen Rechner enthält.

25. Meßkamera nach einem der Ansprüche 1 bis 24, dadurch gekennzeichnet, daß das Objektiv (1) einen Blendenantrieb und/oder einen Positionsgeber zur Übergabe der Blendeneinstellung im Objektiv (1) über die Schnittstelle Kamera-Bildverarbeitung (20) an den Rechner aufweist und daß durch den Rechner durch Auswertung des übergebenen Bildes (mittels Software) ein Regelkreis zur Anpassung der Blende im Objektiv (1) an die Objekthelligkeit aufbaubar ist.

26. Meßkamera nach einem der Ansprüche 1 bis 25, dadurch gekennzeichnet, daß bei wahlweiser Verwendung von Objektiven (1) mit variabler Brennweite und bei deren Ausstattung mit einem Brennweitenantrieb und/oder einem Positionsgeber die Information über die Brennweite über die Schnittstelle Kamera-Bildverarbeitung (20) an den Rechner zur Einstellung der Brennweite (mittels Software) durch den Rechner übergebbar ist.

27. Meßkamera nach einem der Ansprüche 1 bis 26 mit einem Varioobjektiv mit Positionsgeber, dadurch gekennzeichnet, daß die bei Brennweitenvariation erforderliche Korrektur der Schnittweite durch rechnergesteuerte Verschiebung des Halbleiterbildwandlers (Halbleiter-Bildsensors 4) erzielbar ist.

28. Meßkamera nach Anspruch 1, 3 und 13, dadurch gekennzeichnet, daß die hochgenaue(n) Führung(en) Führungssäulen (6a, 6a) einschließen, auf denen der Sensorträger (5) mittels Wälzkörpern (Führungskugeln 6d) axial verschiebbar ist.

29. Meßkamera nach Anspruch 28, dadurch gekennzeichnet, daß die Führungssäulen (6a, 6a) einerseits im Meßkopf (3) und andererseits in einem senkrechten, hinteren Wandstück eines vom Meßkopf (3) in das Innere des Kameragehäuses (2) abragenden Trägers (7) gelagert sind.

30. Meßkamera nach Anspruch 29, dadurch gekennzeichnet, daß der Träger (7) als geschlossene Rahmenkonstruktion ausgebildet ist.

31. Meßkamera nach Anspruch 29 oder 30, dadurch gekennzeichnet, daß der Meßkopf (3) und Träger (7) einstückig ausgebildet sind.

32. Meßkamera nach einem der Ansprüche 28 bis 31, dadurch gekennzeichnet, daß der Sensorträger (5) Führungsbuchsen (6b, 6b) und Kugelkäfige (6c, 6c) aufweist, mittels derer der Sensorträger (5) über Führungskugeln (6d) auf den Führungssäulen (6a, 6a) axial verschiebbar ist.

33. Meßkamera nach einem der Ansprüche 28 bis 32, dadurch gekennzeichnet, daß die für die axiale Verschiebebewegung des Sensorträgers (5) nutzbare Länge der Führungssäulen (6a, 6a) dem Fokussierweg des Halbleiter-Bildsensors (4) aus seiner äußersten vorderen Stellung in seine äußerste hintere Stellung (und umgekehrt) entspricht.

34. Meßkamera nach Anspruch 33, dadurch gekennzeichnet, daß die Länge des Fokussierwegs des Halbleiter-Bildsensors (4) durch die Brennweite des Objektivs (1) und die gewünschten Abbildungsmaßstäbe bestimmt ist.

35. Meßkamera nach Anspruch 18, dadurch gekennzeichnet, daß zum Ausgleich des axialen Spiels zwischen den Getriebegliedern (motorischer Antrieb 16; Schraubtrieb 25, 26; Sensorträger 5) fluchtend zur Achse des motorischen Antriebs (16) eine Druckfeder (27) angebracht ist, die von rückwärts einen Druck gegen den Sensorträger (5) ausübt.

36. Meßkamera nach einem der Ansprüche 1 bis 35, dadurch gekennzeichnet, daß die Meßkamera eine CCD-Kamera ist.

## Claims

1. A measurement camera comprising a lens, a camera body, a semiconductor converter with camera electronics and focussing means,
characterised in that
the camera body is formed from a camera housing (2) and a measuring head (3) and that for focussing purposes a semiconductor image converter (semiconductor image sensor 4) is arranged within the camera body in such a way that, being held in a sensor carrier (5) and guided in a laterally play-free manner displaceably and motor-positionably on a guide configuration by means of a high-precision guide or guides (6a, 6d), fixed on a carrier (7) projecting from the rearward surface of the measuring head (3) into the interior of the camera housing (2), it (4) is axially displaceable along the optical axis so that focussing can be implemented while maintaining a minimum known and constant operational error, and the position of the projection centre (P) is maintained even in the event of a change in the lens (1) in relation to the coordinate system (K) of the camera, which is fixed with respect to the housing.

2. A measurement camera according to claim 1 characterised in that the image plane position and therewith also the focus-dependent parameters of the internal orientation can always be detected with a high degree of accuracy by means for separate positional measurement and can be incorporated into the measurement algorithm.

3. A measurement camera according to claims 1 and 2 characterised in that focussing of the semiconductor image converter (semiconductor image sensor 4) is manually positionable by way of fine-adjustment elements.

4. A measurement camera according to one of claims 1 to 3 characterised in that semiconductor image converters (semiconductor image sensors 4) of different formats can be used.

5. A measurement camera according to claim 1 characterised in that the sensor carrier (5) is designed for selectively accommodating semiconductor image converters (semiconductor image sensors 4) of different formats.

6. A measurement camera according to one of claims 1 to 5 characterised in that there are provided means for detecting the respective axial position of the semiconductor image converter (semiconductor image sensor 4).

7. A measurement camera according to claim 6 characterised in that a linear potentiometer (18) is arranged as the means for detecting the respective axial position.

8. A measurement camera according to one of claims 1 to 7 characterised in that opto-electronic means (light barrier means 17) are provided for axial zero-position positioning (reference position) of the semiconductor image converter (semiconductor image sensor 4).

9. A measurement camera according to one of claims 1 to 8 characterised in that the camera can be connected by way of an interface (20) to a computer from which the semiconductor image converter (semiconductor image sensor 4) can be positioned by means of software by way of the motor drive (16).

10. A measurement camera according to one of claims 1 to 9 characterised in that the focus position of the semiconductor image converter (semiconductor image sensor 4) can be determined by evaluating structures of the image content.

11. A measurement camera according to one of claims 1 to 10 characterised in that the camera can be connected by way of an interface (20) to a computer for image processing, by which with suitable evaluation of the transmitted image a regulating circuit can be afforded for positioning the semiconductor image converter (semiconductor image sensor 4) to the best sharp focussing plane and thus automatic focussing can be implemented.

12. A measurement camera according to one of claims 1 to 11 characterised by a temperature sensor for electronic compensation of the temperature effect on the camera constant (22).

13. A measurement camera according to one of claims 1 to 12 characterised by a measurement head (3) having a high level of mechanical stiffness.

14. A measurement camera according to claim 13 characterised in that the measurement head (3) has reference elements (8a, 8c, 8e, 9), by means of which it is possible to produce a precise position of the lens (1) and the semiconductor image converter (semiconductor image sensor 4).

15. A measurement camera according to one of claims 1 to 14 characterised in that the receiver surface of the semiconductor image converter (semiconductor image sensor 4) is oriented in parallel relationship with the reference surface (8a) of the lens-camera interface (8).

16. A measurement camera according to one of claims 1 to 15 characterised in that the wall (19) of the camera housing (2), the measurement head (3) and a protective glass (24) covering the lens-side opening of the measurement head (3) form a protective housing which is closed on all sides and which isolates the components arranged therein from external electrical and climatic ambient influences.

17. A measurement camera according to one of claims 1 to 16 characterised in that the camera electronics (21) is of a modular structure for ease of adaptability of the respective semiconductor image converter (semiconductor image sensor 4) being used and/or the camera-image processing interface (20).

18. A measurement camera according to claim 1 or one of claims 4 to 17 characterised in that the motor drive (16) is a dc motor, a piezoelectric drive or a stepping motor.

19. A measurement camera according to one of claims 1 to 18 characterised in that a pressure element or elements (bending spring 11) is or are arranged at the lens-camera interface (8) at the measurement head (3) to compensate for the lateral clearance between the reference surfaces between the lens (1) and the measurement head (3).

20. A measurement camera according to one of claims 1 to 19 characterised in that the lens (1) can be fixed to the measurement head (3) by means of a bayonet connection (bayonet flange 10 and screw collar ring 13).

21. A measurement camera according to one of claims 1 to 20 characterised in that various lenses (1) adapted to the respective measurement function with a unitary interface can be used in the camera.

22. A measurement camera according to one of claims 1 to 21 characterised in that the lens (1) is of a high-precision simple design.

23. A measurement camera according to one of claims 1 to 22 characterised in that the electrical plug connection (12, 12) between the lens (1) and the measurement head (3) is integrated into the bayonet connection (10, 13).

24. A measurement camera according to one of claims 1 to 23 characterised in that the lens (1) contains electronic coding for the call-up of typical and/or individual optical data by a computer.

25. A measurement camera according to one of claims 1 to 24 characterised in that the lens (1) has an aperture drive and/or a position sender for transferring the aperture setting in the lens (1) by way of the camera-image processing interface (20) to the computer and that a regulating circuit for adapting the aperture in the lens (1) to the level of object brightness can be formed by the computer by evaluation of the transmitted image (by means of software).

26. A measurement camera according to one of claims 1 to 25 characterised in that with the selective use of lenses (1) of variable focal length and with the provision thereof with a focal length drive and/or a position sender information about the focal length can be transmitted by way of the camera-image processing interface (20) to the computer for setting of the focal length (by means of software) by the computer.

27. A measurement camera according to one of claims 1 to 26 having a zoom lens with position sender characterised in that correction of the intercept length which is required upon a variation in focal length can be achieved by computer-controlled displacement of the semiconductor image converter (semiconductor image sensor 4).

28. A measurement camera according to claims 1, 3 and 13 characterised in that the high-precision guide or guides include guide columns (6a, 6a) on which the sensor carrier (5) is axially displaceable by means of rolling bodies (guide balls 6d).

29. A measurement camera according to claim 28 characterised in that the guide columns (6a, 6a) are supported on the one hand in the measurement head (3) and on the other hand in a perpendicular rear wall portion of a carrier (7) which projects from the measurement head (3) into the interior of the camera housing (2).

30. A measurement camera according to claim 29 characterised in that the carrier (7) is in the form of a closed frame structure.

31. A measurement camera according to claim 29 or claim 30 characterised in that the measurement head (3) and the carrier (7) are of a one-piece structure.

32. A measurement camera according to one of claims 28 to 31 characterised in that the sensor carrier (5) has guide bushes (6b, 6b) and ball cages (6c, 6c), by means of which the sensor carrier (5) is axially displaceable by way of guide balls (6d) on the guide columns (6a, 6a).

33. A measurement camera according to one of claims 28 to 32 characterised in that the length of the guide columns (6a, 6a), which can be used for the axial sliding movement of the sensor carrier (5), corresponds to the focussing travel of the semiconductor image sensor (4) from its outermost front position into its outermost rear position (and vice-versa).

34. A measurement camera according to claim 33 characterised in that the length of the focussing travel of the semiconductor image sensor (4) is determined by the focal length of the lens (1) and the desired imaging scales.

35. A measurement camera according to claim 18 characterised in that to compensate for the axial clearance between the transmission members (motor drive 16; screw drive means 25, 26; sensor carrier 5) a compression spring (27) is disposed in alignment with respect to the axis of the motor drive (16) and applies a pressure against the sensor carrier (5) from the rear.

36. A measurement camera according to one of claims 1 to 35 characterised in that the measurement camera is a CCD-camera.

## Revendications

1. Caméra de mesure formée d'un objectif, d'un corps de caméra, d'un transformateur à semi-conducteurs pourvu d'un système électronique de caméra, et de moyens de focalisation,
caractérisée en ce que le corps de caméra comprend le boîtier de caméra (2) et une tête de mesure (3) et en ce que pour la focalisation, un transformateur d'image à semi-conducteurs (capteur d'image à semi-conducteurs 4) est disposé à l'intérieur du corps de caméra de telle sorte qu'il (4) soit mobile axialement le long de l'axe optique, en étant maintenu dans un support de capteur (5) et en étant mobile et apte à être positionné à l'aide d'un moteur, sans jeu latéral, à l'aide d'un ou plusieurs guidages à grande précision (6a à 6d) sur un guidage à rouleaux fixé sur un support (7) qui fait saillie sur la surface arrière de la tête de mesure (3) et entre à l'intérieur du boîtier de caméra (2), de sorte que la focalisation peut être effectuée en maintenant un défaut de déroulement connu et constant minimal, et la position du centre de projection (P) est maintenue même si l'objectif (1) change par rapport au système de coordonnées (K) de la caméra qui est fixé pour le boîtier.

2. Caméra de mesure selon la revendication 1, caractérisée en ce que la position du plan d'image et, ainsi, les paramètres qui sont fonction du foyer, pour l'orientation interne, peuvent être enregistrés en permanence avec une grande précision grâce à des moyens pour une mesure de position séparée, et peuvent être intégrés à l'algorithme de mesure.

3. Caméra de mesure selon les revendications 1 et 2, caractérisée en ce que la focalisation du transformateur d'image à semi-conducteurs (capteur d'image à semi-conducteurs 4) est apte à être positionnée manuellement grâce à des éléments de réglage de précision.

4. Caméra de mesure selon l'une des revendications 1 à 3, caractérisée en ce que des transformateurs d'image à semi-conducteurs (capteurs d'image à semi-conducteurs 4) de différents formats peuvent être utilisés.

5. Caméra de mesure selon la revendication 1, caractérisée en ce que le support de capteur (5) est conçu pour recevoir au choix des transformateurs d'image à semi-conducteurs (capteurs d'image à semi-conducteurs 4) de différents formats.

6. Caméra de mesure selon l'une des revendications 1 à 5, caractérisée en ce qu'il est prévu des moyens pour enregistrer la position axiale du transformateur d'image à semi-conducteurs (capteur d'image à semi-conducteurs 4).

7. Caméra de mesure selon la revendication 6, caractérisée en ce qu'il est prévu comme moyen pour enregistrer la position axiale un potentiomètre linéaire (18).

8. Caméra de mesure selon l'une des revendications 1 à 7, caractérisée en ce qu'il est prévu pour le positionnement axial à la position zéro (position de référence) du transformateur d'image à semi-conducteurs (capteur d'image à semi-conducteurs 4) des moyens optoélectroniques (barrière lumineuse 17).

9. Caméra de mesure selon l'une des revendications 1 à 8, caractérisée en ce que la caméra peut être reliée par l'intermédiaire d'une interface (20) à un ordinateur à partir duquel le transformateur d'image à semi-conducteurs (capteur d'image à semi-conducteurs 4) peut être positionné à l'aide d'un logiciel, grâce à l'entraînement par moteur (16).

10. Caméra de mesure selon l'une des revendications 1 à 9, caractérisée en ce que la position focale du transformateur d'image à semi-conducteurs (capteur d'image à semi-conducteurs 4) peut être définie par l'évaluation de structures du contenu de l'image.

11. Caméra de mesure selon l'une des revendications 1 à 10, caractérisée en ce que la caméra peut être reliée par l'intermédiaire d'une interface (20), en vue du traitement d'image, à un ordinateur par lequel un circuit régulateur est constitué, en présence d'une évaluation adéquate de l'image transmise, pour le positionnement du transformateur d'image à semi-conducteurs (capteur d'image à semi-conducteurs 4) sur le meilleur plan de netteté et une focalisation automatique peut ainsi être réalisée.

12. Caméra de mesure selon l'une des revendications 1 à 11, caractérisée par un capteur de température pour la compensation électronique de la variation de température de la constante de chambre (22).

13. Caméra de mesure selon l'une des revendications 1 à 12, caractérisée par une tête de mesure (3) à grande rigidité mécanique.

14. Caméra de mesure selon la revendication 13, caractérisée en ce que la tête de mesure (3) comporte des éléments de référence (8a, 8c, 8e, 9) à l'aide desquels une position précise de l'objectif (1) et du transformateur d'image à semi-conducteurs (capteur d'image à semi-conducteurs 4) peut être obtenue.

15. Caméra de mesure selon l'une des revendications 1 à 14, caractérisée en ce que la surface réceptrice du transformateur d'image à semi-conducteurs (capteur d'image à semi-conducteurs 4) est orientée parallèlement à la surface de référence (8a) de l'interface objectif-caméra (8).

16. Caméra de mesure selon l'une des revendications 1 à 15, caractérisée en ce que la paroi (19) du boîtier de caméra (2), la tête de mesure (3) et un verre de protection (24) qui couvre l'ouverture de la tête de mesure (3) située côté objectif forment un boîtier de protection fermé de tous les côtés qui protège les composants qu'il contient des influences environnantes électriques et climatiques extérieures.

17. Caméra de mesure selon l'une des revendications 1 à 16, caractérisée en ce que le système électronique de la caméra (21) a une construction modulaire en vue d'une adaptation simple du transformateur d'image à semi-conducteurs (capteur d'image à semi-conducteurs 4) en place et/ou de l'interface caméra-traitement d'image (20).

18. Caméra de mesure selon la revendication 1 ou selon l'une des revendications 4 à 17, caractérisée en ce que l'entraînement par moteur (16) consiste en un moteur à courant continu, un entraînement piézoélectrique ou un moteur pas à pas.

19. Caméra de mesure selon l'une des revendications 1 à 18, caractérisée en ce qu'il est prévu au niveau de l'interface objectif-caméra (8), sur la tête de mesure (3), pour compenser le jeu latéral entre les surfaces de référence situées entre l'objectif (1) et la tête de mesure (3), un ou plusieurs éléments de pression (ressort spiral 11).

20. Caméra de mesure selon l'une des revendications 1 à 19, caractérisée en ce que l'objectif (1) peut être fixé à la tête de mesure (3) à l'aide d'une liaison à baïonnette (bride à baïonnette 10, bague d'accouplement 13).

21. Caméra de mesure selon l'une des revendications 1 à 20, caractérisée en ce que différents objectifs (1) adaptés à la tâche de mesure correspondante et présentant une interface uniforme peuvent être utilisés avec ladite caméra.

22. Caméra de mesure selon l'une des revendications 1 à 21, caractérisée en ce que l'objectif (1) présente une construction simple très précise.

23. Caméra de mesure selon l'une des revendications 1 à 22, caractérisée en ce que le connecteur électrique à fiches (12, 12) entre l'objectif (1) et la tête de mesure (3) est intégré dans la liaison à baïonnette (10, 13).

24. Caméra de mesure selon l'une des revendications 1 à 23, caractérisée en ce que l'objectif (1) contient un codage électronique en vue d'appeler des données optiques typiques et/ou individuelles grâce à un ordinateur.

25. Caméra de mesure selon l'une des revendications 1 à 24, caractérisée en ce que l'objectif (1) comporte un entraînement de diaphragme et/ou un indicateur de position pour transmettre à l'ordinateur la mise au point dans l'objectif (1), par l'intermédiaire de l'interface caméra-traitement d'image (20), et en ce que grâce à l'ordinateur et à l'évaluation de l'image transmise, un circuit régulateur peut être constitué (à l'aide d'un logiciel) pour l'adaptation du diaphragme dans l'objectif (1) à la luminosité de l'objet.

26. Caméra de mesure selon l'une des revendications 1 à 25, caractérisée en ce que si on utilise au choix des objectifs (1) à distance focale variable et qu'on les équipe d'un entraînement de distance focale, et/ou un indicateur de position, l'information concernant la distance focale peut être transmise à l'ordinateur par l'intermédiaire de l'interface caméra-traitement d'image (20) en vue du réglage de la distance focale par ledit ordinateur (à l'aide d'un logiciel).

27. Caméra de mesure selon l'une des revendications 1 à 26 avec un zoom à indicateur de position, caractérisée en ce que la correction de la focale frontale nécessaire en cas de variation de la distance focale peut être obtenue grâce à un déplacement commandé par ordinateur du transformateur d'image à semi-conducteurs (capteur d'image à semi-conducteur 4).

28. Caméra de mesure selon les revendications 1, 3 et 13, caractérisée en ce que le ou les guidages à très grande précision comprennent des colonnes de guidage (6a, 6a) sur lesquelles le support de capteur (5) est mobile axialement grâce à des corps de roulement (billes de guidage 6d).

29. Caméra de mesure selon la revendication 28, caractérisée en ce que les colonnes de guidage (6a, 6a) sont montées d'une part dans la tête de mesure (3), et d'autre part dans une partie de paroi verticale arrière d'un support (7) qui dépasse de la tête de mesure (3) et entre à l'intérieur du boîtier de caméra (2).

30. Caméra de mesure selon la revendication 29, caractérisée en ce que le support (7) est conçu comme une construction de châssis fermée.

31. Caméra de mesure selon la revendication 29 ou 30, caractérisée en ce que la tête de mesure (3) et le support (7) sont conçus en une seule pièce.

32. Caméra de mesure selon l'une des revendications 28 à 31, caractérisée en ce que le support de capteur (5) comporte des douilles de guidage (6b, 6b) et des cages à billes (6c, 6c) grâce auxquelles il est mobile axialement sur les colonnes de guidage (6a, 6a), par l'intermédiaire des billes de guidage (6d).

33. Caméra de mesure selon l'une des revendications 28 à 32, caractérisée en ce que la longueur des colonnes de guidage (6a, 6a) utile pour le mouvement axial du support de capteur (5) correspond à la course de focalisation du capteur d'image à semi-conducteurs (4) entre sa position avant extrême et sa position arrière extrême (et inversement).

34. Caméra de mesure selon la revendication 33, caractérisée en ce que la longueur de la course de focalisation du capteur d'image à semi-conducteurs (4) est définie par la distance focale de l'objectif (1) et les échelles de reproduction souhaitées.

35. Caméra de mesure selon la revendication 18, caractérisée en ce que pour compenser le jeu axial entre les organes de transmission (entraînement par moteur 16 ; engrenage à vis 25, 26 ; support de capteur 5), on dispose dans l'alignement de l'axe de l'entraînement par moteur (16) un ressort de pression (27) qui exerce une pression, par l'arrière, contre le support de capteur (5).

36. Caméra de mesure selon l'une des revendications 1 à 35, caractérisée en ce que la caméra est une caméra CCD.
